# EUROPEAN PATENT APPLICATION

(11) **EP 4 636 581 A1**
(43) Date of publication of application: **22.10.2025**
(21) Application number: 23902706.3
(22) Date of filing: 12.12.2023
(51) Int. Cl.: G06F 8/65, H04W 24/02

(54) **MODEL OPTIMIZATION METHOD AND APPARATUS, AND DEVICE AND STORAGE MEDIUM**

(30) Priority: 13.12.2022 CN 202211595762
(71) Applicant: Spreadtrum Communications (Shanghai) Co., Ltd., Shanghai 201203 (CN)
(72) Inventor: CHEN, Xiaoyu, Shanghai 201203 (CN)
(74) Representative: Vossius & Partner Patentanwälte Rechtsanwälte mbB
(86) International application number: PCT/CN2023/138167
(87) International publication number: WO 2024/125510

(57) **Abstract**

The present application provides a model optimization method and apparatus, a device, and a storage medium. The present application relates to the field of communication technology. The model optimization method includes: during a process of completing model update or after completing the model update, a terminal device may acquire optimization information, where the optimization information includes one or more of data collection indication information, a data preprocessing method, a data post-processing method, and a model output type; and the terminal device then optimizes an input and/or an output of a model according to the optimization information, ensuring the performance of the updated model, enabling the updated model to work normally, and thus ensuring normal service for a user.

## Description

This application claims priority to Chinese patent application No. 202211595762.1, filed with the China National Intellectual Property Administration on December 13, 2022, and entitled "MODEL OPTIMIZATION METHOD AND APPARATUS, DEVICE, AND STORAGE MEDIUM" the entire contents of which are incorporated herein by reference.

### TECHNICAL FIELD

The present application relates to the field of communication technology, and in particular, to a model optimization method and apparatus, a device, and a storage medium.

### BACKGROUND

With the development of application requirements and technologies, artificial intelligence (Artificial Intelligence, AI) and machine learning (Machine Learning, ML) have been gradually introduced in various fields. Deploying AI/ML models on terminal devices can achieve better system performance compared to traditional communication system solutions.

However, there is currently no solution on how to optimize models to meet the data requirements of updated AI/ML models and thereby ensure model performance.

### SUMMARY

The present application provides a model optimization method and apparatus, a device, and a storage medium, providing a solution on how to optimize models.

In a first aspect, the present application provides a model optimization method, including:
acquiring optimization information, the optimization information including one or more of data collection indication information, a data preprocessing method, a data post-processing method, and a model output type, where the data collection indication information is used for indicating a parameter used during data collection, the data preprocessing method is a method for preprocessing collected data, and the data post-processing method is a method for processing an output result of a model; and
optimizing, according to the optimization information, an input and/or an output of the model.

In a possible implementation, the data collection indication information includes one or more of the following:
a type of the collected data;
a sampling period;
a sampling period variation value;
a sampling frequency;
a sampling frequency variation value;
a sampling length;
a sampling length variation; and
a sampling target.

In a possible implementation, the sampling target is one or more of the following:
a height of a base station;
a height of a terminal device;
a preset inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

In a possible implementation, the data preprocessing method and/or the data post-processing method includes one or more of the following:
a quantization method; and
a normalization method.

In a possible implementation, the quantization method includes one or more of the following:
a ratio analysis method;
a trend analysis method; and
a structural analysis method.

In a possible implementation, the method further includes:
acquiring a quantization parameter used in the quantization method.

In a possible implementation, the normalization method includes one or more of the following:
min-max normalization;
standard score; and
reference point normalization.

In a possible implementation, the method further includes:
acquiring a normalization parameter used in the normalization method.

In a possible implementation, the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

In a possible implementation, the optimization information is carried in a response message of a model update request.

In a possible implementation, the optimization information is carried in one or more of following signaling:
a radio resource control RRC message;
a media access control layer control element MAC CE; and
downlink control information DCI.

In a second aspect, the present application provides a model optimization method, including:
sending optimization information, where the optimization information is used for optimizing an input and/or an output of a model;
where the optimization information includes one or more of data collection indication information, a data preprocessing method, a data post-processing method, and a model output type, where the data collection indication information is used for indicating a parameter used during data collection, the data preprocessing method is a method for preprocessing collected data, and the data post-processing method is a method for processing an output result of the model.

In a possible implementation, the data collection indication information includes one or more of the following:
a type of the collected data;
a sampling period;
a sampling period variation value;
a sampling frequency;
a sampling frequency variation value;
a sampling length;
a sampling length variation; and
a sampling target.

In a possible implementation, the sampling target is one or more of the following:
a height of a base station;
a height of a terminal device;
a preset distance inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

In a possible implementation, the data preprocessing method includes one or more of the following:
a quantization method; and
a normalization method.

In a possible implementation, the quantization method includes one or more of the following:
a ratio analysis method;
a trend analysis method; and
a structural analysis method.

In a possible implementation, the method further includes:
sending a quantization parameter used in the quantization method.

In a possible implementation, the normalization method includes one or more of the following:
min-max normalization;
standard score; and
reference point normalization.

In a possible implementation, the method further includes:
sending a normalization parameter used in the normalization method.

In a possible implementation, the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

In a possible implementation, the optimization information is carried in a response message of a model update request.

In a possible implementation, the optimization information is carried in one or more of following signaling:
a radio resource control RRC message;
a media access control layer control element MAC CE; and
downlink control information DCI.

In a third aspect, the present application provides a model optimization apparatus, including:
an acquisition module, configured to acquire optimization information, the optimization information including one or more of data collection indication information, a data preprocessing method, a data post-processing method, and a model output type, where the data collection indication information is used for indicating a parameter used during data collection, the data preprocessing method is a method for preprocessing collected data, and the data post-processing method is a method for processing an output result of a model; and
an optimization module, configured to optimize, according to the optimization information, an input and/or an output of the model.

In a possible implementation, the data collection indication information includes one or more of the following:
a type of the collected data;
a sampling period;
a sampling period variation value;
a sampling frequency;
a sampling frequency variation value;
a sampling length;
a sampling length variation; and
a sampling target.

In a possible implementation, the sampling target is one or more of the following:
a height of a base station;
a height of a terminal device;
a preset inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

In a possible implementation, the data preprocessing method and/or the data post-processing method includes one or more of the following:
a quantization method; and
a normalization method.

In a possible implementation, the quantization method includes one or more of the following:
a ratio analysis method;
a trend analysis method; and
a structural analysis method.

In a possible implementation, the acquisition module is specifically configured to:
acquire a quantization parameter used in the quantization method.

In a possible implementation, the normalization method includes one or more of the following:
min-max normalization;
standard score; and
reference point normalization.

In a possible implementation, the acquisition module is specifically configured to:
acquire a normalization parameter used in the normalization method.

In a possible implementation, the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

In a possible implementation, the optimization information is carried in a response message of a model update request.

In a possible implementation, the optimization information is carried in one or more of following signaling:
a radio resource control RRC message;
a media access control layer control element MAC CE; and
downlink control information DCI.

In a fourth aspect, the present application provides a model optimization apparatus, including:
a sending module, configured to send optimization information, where the optimization information is used for optimizing an input and/or an output of a model;
where the optimization information includes one or more of data collection indication information, a data preprocessing method, a data post-processing method, and a model output type, where the data collection indication information is used for indicating a parameter used during data collection, the data preprocessing method is a method for preprocessing collected data, and the data post-processing method is a method for processing an output result of the model.

In a possible implementation, the data collection indication information includes one or more of the following:
a type of the collected data;
a sampling period;
a sampling period variation value;
a sampling frequency;
a sampling frequency variation value;
a sampling length;
a sampling length variation; and
a sampling target.

In a possible implementation, the sampling target is one or more of the following:
a height of a base station;
a height of a terminal device;
a preset distance inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

In a possible implementation, the data preprocessing method includes one or more of the following:
a quantization method; and
a normalization method.

In a possible implementation, the quantization method includes one or more of the following:
a ratio analysis method;
a trend analysis method; and
a structural analysis method.

In a possible implementation, the sending module is specifically configured to:
send a quantization parameter used in the quantization method.

In a possible implementation, the normalization method includes one or more of the following:
min-max normalization;
standard score; and
reference point normalization.

In a possible implementation, the sending module is specifically configured to:
send a normalization parameter used in the normalization method.

In a possible implementation, the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

In a possible implementation, the optimization information is carried in a response message of a model update request.

In a possible implementation, the optimization information is carried in one or more of following signaling:
a radio resource control RRC message;
a media access control layer control element MAC CE; and
downlink control information DCI.

In a fifth aspect, the present application provides an electronic device, including: a processor, and a memory communicatively connected to the processor;
where the memory stores a computer executable instruction; and
the processor executes the computer executable instruction stored in the memory to implement the model optimization method described in the first aspect.

In a sixth aspect, the present application provides an electronic device, including: a processor, and a memory communicatively connected to the processor;
where the memory stores a computer executable instruction; and
the processor executes the computer executable instruction stored in the memory to implement the model optimization method described in the second aspect.

In a seventh aspect, the present application provides a computer readable storage medium, where the computer readable storage medium stores a computer executable instruction which, when executed by a computer, causes the model optimization method described in the first aspect or the second aspect to be executed.

In an eighth aspect, the present application provides a computer program product, including a computer program, where the computer program, when executed by a computer, causes the model optimization method described in the first aspect or the second aspect to be executed.

In a ninth aspect, the present application provides a chip, where the chip stores a computer program which, when executed by the chip, causes the model optimization method described in the first aspect or the second aspect to be executed.

In a possible implementation, the chip is a chip in a chip module.

In a tenth aspect, the present application provides a module device, where the module device includes a power module, a storage module, and a chip module;
where the power module is configured to provide power to the module device;
the storage module is configured to store data and instructions; and
the chip module is configured to execute the model optimization method described in the first aspect or the second aspect.

The present application provides a model optimization method and apparatus, a device, and a storage medium. During a process of completing model update or after completing the model update, a terminal device may acquire optimization information, where the optimization information includes one or more of data collection indication information, a data preprocessing method, a data post-processing method, and a model output type; and then the terminal device optimizes, according to the optimization information, an input and/or an output of the model. The present application provides a solution on how to optimize models.

### BRIEF DESCRIPTION OF DRAWINGS

FIG. 1 is a diagram of an application scenario applicable to the present application.
FIG. 2 is a flow diagram of a model optimization method provided in a first embodiment of the present application.
FIG. 3 is a structural diagram of a model optimization apparatus provided in a second embodiment of the present application.
FIG. 4 is a structural diagram of a model optimization apparatus provided in a third embodiment of the present application.
FIG. 5 is a structural diagram of an electronic device provided in a fourth embodiment of the present application.

### DESCRIPTION OF EMBODIMENTS

Technical solutions in embodiments of the present application may be applied to various communication systems, for example, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th-generation (5th-generation, 5G) mobile communication system, or a new radio access technology (New Radio Access Technology, NR). The 5G mobile communication system may include a non-standalone (Non-Standalone, NSA) 5G mobile communication system and/or a standalone (Standalone, SA) 5G mobile communication system.

The technical solutions provided in the embodiments of the present application may also be applied to future communication systems, for example, a 6th-generation mobile communication system, a 7th-generation mobile communication system, etc., which is not limited in the present application.

The technical solutions provided in the present application may also be applied to machine type communication (Machine Type Communication, MTC), long term evolution-machine (Long Term Evolution-Machine, LTE-M), a device-to-device (Device-to Device, D2D) network, a machine-to-machine (Machine to Machine, M2M) network, an Internet of things (Internet of Things, IoT) network, or other networks. Among them, the IoT network may include, for example, connected vehicles. In a connected vehicle system, the communication methods are collectively referred to as Vehicle-to-X (Vehicle-to-X, V2X, where X may represent anything). For example, V2X may include: vehicle-to-vehicle (Vehicle-to-Vehicle, V2V) communication, vehicle-to-infrastructure (Vehicle-to-Infrastructure, V2I) communication, vehicle-to-pedestrian (Vehicle-to-Pedestrian, V2P) communication, or vehicle-to-network (Vehicle-to-Network, V2N) communication, etc.

For models deployed on a terminal device (e.g., AI/ML models or other models), to ensure the performance of the terminal device, the terminal device needs to use an appropriate model. Therefore, the model may be updated to ensure that the terminal device uses the appropriate model.

In a possible implementation of the present application, model updates on a terminal device side may be roughly divided into following three categories.
(1) The terminal device monitors a model and independently completes a model update.
(2) The terminal device monitors the model and sends a monitoring result to a network device, to cause the network device to assist the terminal device in completing the model update.
(3) The network device monitors the model deployed on the terminal device and instructs the terminal device to complete the model update.

After the model is updated, requirements for data collection and processing configurations of the model may also change. In the above model update methods, if an updated model is already in a model library of the terminal device, the terminal device may optimize the updated model according to related configuration information (data collection and processing configurations, etc.) corresponding to the model.

However, if the updated model is not in the model library of the terminal device, that is, the updated model is sent by the network device and the model is not included in the terminal device, the terminal device may acquire related configuration information corresponding to the updated model before the updated model takes effect or during a model update process.

How to enable the terminal device to determine data collection and processing configurations related to an updated AI/ML model to meet data requirements of the updated AI/ML model and thereby ensure model performance is an urgent problem to be solved.

To solve the above-mentioned problem, the present application proposes a model optimization method. A terminal device may acquire optimization information (data collection indication information, a data preprocessing method, a data post-processing method, and a model output type, etc.) sent by a network device, and then optimize an input and/or an output of a model according to the optimization information. The present application provides a solution on how to perform model optimization.

It can be understood that the model optimized according to the optimization information in the present application may be either an updated model or a model before an update, that is, there is no limitation on the model on which an optimization operation is performed.

It should be noted that in the embodiments of the present application, model updates are broadly defined. The model updates involved in the present application include but are not limited to: model switching (Model Switching), a model update (Model Update), a model selection (Model Selection), a fallback operation (Fallback Operation), a model activation (Model Activation), a model deactivation (Model Deactivation), etc.

The model update (Model Update) includes an adjustment to a model structure and an adjustment to a model parameter (a weight, a bias parameter, etc.). The model structure includes but is not limited to: a convolutional neural network (Convolutional Neural Network, CNN), a deep neural network (Deep Neural Network, DNN), a Transformer, a long short-term memory neural network (Long Short-Term Memory, LSTM), etc.

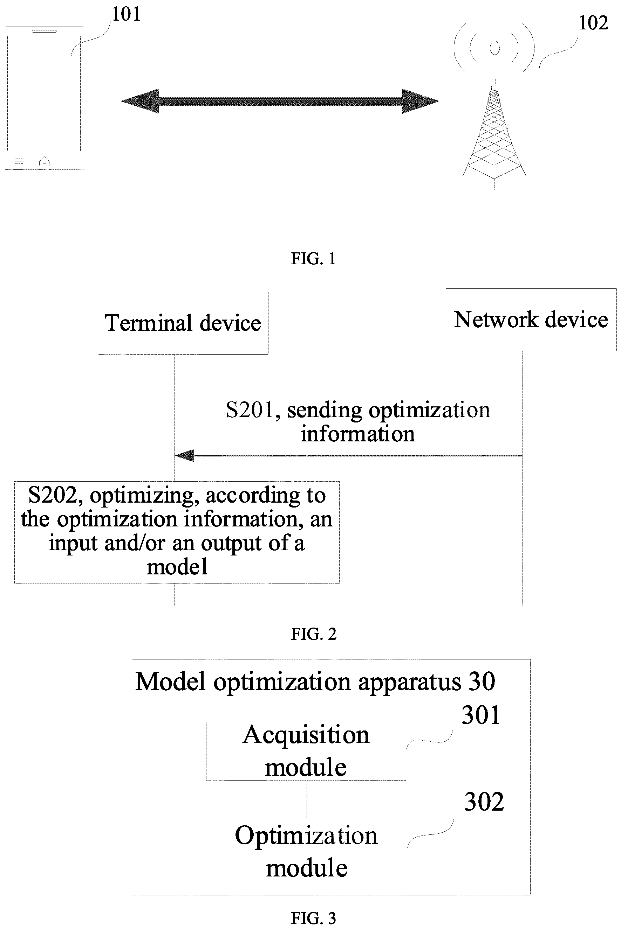

To facilitate understanding, an application scenario applicable to the embodiments of the present application is described below with reference to FIG. 1.

For example, FIG. 1 is a diagram of an application scenario applicable to the present application. As shown in FIG. 1, a terminal device 101 and a network device 102 are included. The network device 102 may send optimization information, and the terminal device 101 may receive the optimization information and optimize an input and/or an output of a model according to the optimization information.

It can be understood that there may be a plurality of terminal devices 101 and a plurality of network devices, which is not shown in the figure.

In the embodiments of the present application, the network device may be any device with wireless transceiver functions. The device includes but is not limited to: an evolved node B (Evolved Node, eNB), a radio network controller (Radio Network Controller, RNC), a Node B (Node B, NB), a base station controller (Base Station Controller, BSC), a base transceiver station (Base Transceiver Station, BTS), a home base station (e.g., a home Evolved NodeB or a Home Node B, HNB), a baseband unit (Baseband Unit, BBU), an access point (Access Point, AP) in a wireless fidelity (Wireless Fidelity, WiFi) system, a wireless relay node, a wireless backhaul node, a transmission point (Transmission Point, TP), or a transmission and reception point (Transmission and Reception Point, TRP), etc., or may also be the next generation Node B (the Next Generation Node B, gNB) or a transmission point (TRP or TP) in a 5G system such as an NR system, one or a group of antenna panels (including a plurality of antenna panels) of a base station in a 5G system, or a network node constituting a gNB or a transmission point, such as a baseband unit (Baseband Unit, BBU) or a distributed unit (Distributed Unit, DU), etc.

In some deployments, the gNB may include a centralized unit (Centralized Unit, CU) and a DU. The gNB may further include an active antenna unit (Active Antenna Unit, AAU). The CU implements a part of functions of the gNB, and the DU implements a part of the functions of the gNB. For example, the CU is responsible for processing non-real-time protocols and services, and implementing functions of a radio resource control (Radio Resource Control, RRC) and a PDCP layer. The DU is responsible for processing physical layer protocols and real-time services, and implementing functions of a radio link control (Radio Link Control, RLC) layer, a date link (Medium Access Control, MAC) layer, and a physical (Physical, PHY) layer. The AAU implements a part of physical layer processing functions and related functions of radio frequency processing and active antennas. Since information of the RRC layer will eventually become information of the PHY layer, or be transformed from the information of the PHY layer, in this architecture, high-level signaling, such as RRC layer signaling, may also be considered to be sent by the DU, or by the DU+AAU. It can be understood that the network device may be a device including one or more of a CU node, a DU node, and an AAU node. In addition, the CU may be considered as a network device in a radio access network (Radio Access Network, RAN) or as a network device in a core network (Core Network, CN), which is not limited in the present application.

The network device provides services for a cell, and the terminal device communicates with the cell through a transmission resource (e.g., a frequency domain resource or a spectrum resource) allocated by the network device. The cell may belong to a macro base station (e.g., a macro eNB or a macro gNB) or a base station corresponding to a small cell (Small Cell). The small cell may include: a metro cell (Metro Cell), a micro cell (Micro Cell), a pico cell (Pico Cell), a femto cell (Femto Cell), etc. These small cells have the characteristics of small coverage range and low transmission power, and are suitable for providing high-speed data transmission services.

In the embodiments of the present application, the terminal device may also be referred to as user equipment (User Equipment, UE), an access terminal, a user unit, a user station, a mobile station, a mobile terminal, a remote station, a remote terminal, a mobile device, a user terminal, a terminal, a wireless communication device, a user agent, or a user apparatus.

The terminal device may be a device that provides voice/data connectivity to a user, such as a handheld device with a wireless connection function, a vehicle-mounted device, etc. Currently, some examples of terminals include: a mobile phone (Mobile Phone), a tablet computer (Pad), a computer with a wireless transceiver function (e.g., a laptop, a palmtop, etc.), a mobile Internet device (Mobile Internet Device, MID), a virtual reality (Virtual Reality, VR) device, an augmented reality (Augmented Reality, AR) device, an extended reality (Extended Reality, XR) device, a wireless terminal in industrial control (industrial control), a wireless terminal in self driving (Self Driving), a wireless terminal in remote medical (Remote Medical), a wireless terminal in smart grid (Smart Grid), a wireless terminal in transportation safety (Transportation Safety), a wireless terminal in smart city (Smart City), a wireless terminal in smart home (Smart Home), a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device, or other processing devices connected to a wireless modem, a vehicle-mounted device, a wearable device, a terminal device in a 5G network, or a terminal device in a future evolved public land mobile communication network (Public Land Mobile Network, PLMN), etc.

The wearable device, which may also be referred to as a wearable smart device, is a device developed through intelligent design of daily wearables applying wearable technology, such as glasses, gloves, watches, clothing, and shoes. The wearable device is a portable device that is directly worn on the body or integrated into a user's clothing or accessories. The wearable device is not only a hardware device but also achieve powerful functions through software support, data interaction, and cloud interaction. A broadly defined wearable smart device includes a fully functional, large-sized device that can achieve complete or partial functions without relying on smartphones, such as smart watches or smart glasses, as well as devices that focus on a specific type of application function and need to be used in conjunction with other devices such as smartphones, for example, smart bracelets and smart jewelry for physical sign monitoring, etc.

In addition, the terminal device may also be a terminal device in an IoT system. IoT is an important part of the future development of information technology, and a main technical feature thereof is to connect objects to networks through communication technologies, thereby realizing a smart network of human-machine interconnection and thing-to-thing interconnection. IoT technology can achieve massive connections, deep coverage, and power saving through technologies such as narrow band (Narrow Band, NB).

The technical solutions of the present application and how the technical solutions of the present application solve the above-mentioned technical problem will be described in detail below with specific embodiments. The following specific embodiments may exist independently or may be combined with each other. Same or similar concepts or processes may not be repeated in some embodiments. The embodiments of the present application will be described below with reference to the drawings.

FIG. 2 is a flow diagram of a model optimization method provided in a first embodiment of the present application. As shown in FIG. 2, the method includes following steps.

S201, a network device may send optimization information, and correspondingly, a terminal device receives the optimization information sent by the network device.

The optimization information includes one or more of following information:
(1) data collection indication information;
(2) a data preprocessing method;
(3) a data post-processing method; and
(4) a model output type.

Before introducing the optimization information, a process from an input to an output of a model is introduced here. The process from the input of the model to the output of the model is as follows.
Step 1: collecting data.
Step 2: preprocessing data.
Step 3: inputting preprocessed data into the model.
Step 4: model output.
Step 5: performing data post-processing on the output of the model.

In the optimization information, the data collection indication information is used for indicating a parameter used in step 1, the data preprocessing method refers to a method for preprocessing collected data in step 2, the model output type is used for determining a type of an output result of the model in step 4, and the data post-processing method refers to a method for processing the output result of the model in step 5.

The following provides a detailed explanation of each piece of information that may be included in the optimization information.

### (1) Data collection indication information

The data collection indication information indicates a parameter used during data collection.

Optionally, the data collection indication information includes one or more of the following:
(5) a type of the collected data;
(6) a sampling period;
(7) a sampling period variation value;
(8) a sampling frequency;
(9) a sampling frequency variation value;
(10) a sampling length;
(11) a sampling length variation; and
(12) a sampling target, etc.

The following provides a detailed explanation of each piece of information that may be included in the data collection indication information.

### (5) The type of the collected data

The type of the collected data may be used for determining a type of data that needs to be collected. For example, the type of the collected data may be a reference signal receiving power (Reference Signal Receiving Power, RSRP), a reference signal strength indicator (Reference Signal Strength Indicator, RSSI), reference signal receiving quality (Reference Signal Receiving Quality, RSRQ), etc.

### (6) The sampling period

The sampling period is a period of sampling. For example, if a sampling type is the RSRP, the sampling period may be a period for sampling the RSRP on a 2.4 GHz frequency 1.

### (7) The sampling period variation value

The sampling period variation value may be used for determining the sampling period based on a baseline sampling period. The baseline sampling period may be a preset sampling period, or a sampling period in a sampling configuration of a model to be updated, or, in the absence of an available baseline sampling period, the terminal device may configure the baseline sampling period. Other methods for acquiring the baseline sampling period are also possible, and the embodiments of the present application do not limit the method for acquiring the baseline sampling period.

For example, if the sampling period variation value is x1 and the baseline sampling period is 30 minutes, then the sampling period may be determined to be 30 minutes plus x1.

### (8) The sampling frequency

The sampling frequency refers to a frequency of sampling. For example, if the sampling type is the RSRP, the sampling frequency may be a frequency for sampling the RSRP on the 2.4 GHz frequency 1, for example, 10 Hz, which means sampling is performed every 10 ms.

### (9) The sampling frequency variation value

The sampling frequency variation value may be used for determining the sampling frequency based on a baseline sampling frequency. The baseline sampling frequency may be a preset sampling frequency, or a sampling frequency in the sampling configuration of the model to be updated, or, in the absence of an available baseline sampling frequency, the terminal device may configure the baseline sampling frequency. Other methods for acquiring the baseline sampling frequency are also possible, and the embodiments of the present application do not limit the method for acquiring the baseline sampling frequency.

For example, if the sampling frequency variation value is x2 and the baseline sampling frequency is 100 Hz, then an optimized sampling frequency may be determined to be 100 plus x2 (Hz).

### (10) The sampling length

The sampling length may be used during the data collection to perform sampling based on a determined sampling length. The sampling length may include a length of each sampling and/or a total sampling length of all sampling samples, etc.

### (11) The sampling length variation value

The sampling length variation value may include a length variation value of each sampling and/or a total sampling length variation value of all the sampling samples, etc.

The sampling length variation value may be used for determining the sampling length based on a baseline sampling length. The baseline sampling length may be a preset sampling length, or a sampling length in the sampling configuration of the model to be updated, or, in the absence of an available baseline sampling length, the terminal device may configure the baseline sampling length. Other methods for acquiring the baseline sampling length are also possible, and the embodiments of the present application do not limit the method for acquiring the baseline sampling length.

For example, if the sampling length variation value is x3 and the baseline sampling length is 50, then an optimized sampling length may be determined to be 50 plus x3. The unit of the sampling length may be a quantifier such as times, pieces, and/or a time unit such as seconds or milliseconds, which is not limited in the present application.

### (12) The sampling target

The sampling target may be a sampling scenario or a sampling area, that is, sampling is performed for a certain sampling scenario or sampling area.

Optionally, the sampling scenario refers to a scenario of the data collection. The sampling scenario includes one or more of the following:
urban (urban), non-urban (e.g., rural), high-speed movement, medium-speed movement, low-speed movement, constant-speed movement, stationary, a height of a base station, a height of a terminal device, a preset inter-site distance (Inter-Site Distance, ISD), a movement speed of the terminal device, terminal device distribution, etc.

When the sampling scenario includes urban, it means a data sampling scenario is an urban scenario. When an application scenario of the model includes non-urban, it means the data sampling scenario is a non-urban scenario. When the application scenario of the model includes others, they may be understood by analogy and will not be repeated here.

The high-speed movement, the low-speed movement, the constant-speed movement, and the stationary refer to movement status of the terminal device. If a movement speed of the terminal device is greater than a first threshold, it is determined as the high-speed movement; if the movement speed of the terminal device is less than or equal to the first threshold and greater than or equal to a second threshold, it is determined as the medium-speed movement; if the movement speed of the terminal device is lower than the second threshold, it is determined as the low-speed movement; if the movement speed of the terminal device remains constant or within a same speed range, it is considered to be the constant-speed movement; and if the movement speed of the terminal device is 0 km/h (kilometers per hour), it is determined as the stationary. It can be understood that definitions of the high-speed movement, the medium-speed movement, and the low-speed movement are only examples, and the present application does not limit them. The first threshold and/or the second threshold may be preset (e.g., specified by a protocol), indicated by a network device, or determined through negotiation between the terminal device and the network device, which is not limited in the present application.

The height of the base station may be a specific value or a height range. The height of the terminal device may be a specific value or a height range.

The preset inter-site distance may be considered as a distance between base stations, for example, the preset inter-site distance may be 200 m (meter) or 500 m, etc. The movement speed of the terminal device may be a specific value (e.g., 3 km/h (kilometers per hour), 30 km/h, 60 km/h) or a speed range.

The terminal device distribution may be the number of terminal devices within a certain range or a density distribution characteristic (e.g., dense in the middle and sparse at the edges, or uniformly distributed) of the terminal devices within the certain range, or may also be characterized by outdoor terminal device distribution and indoor terminal device distribution, for example, a ratio of the outdoor terminal device distribution and the indoor terminal device distribution may be, for example, 100%/0% or 20%/80%, respectively.

Optionally, the sampling area indicates an area of the data collection. The sampling area may include one or more of the following:
a frequency, a registration area (Registration Area, RA), a tracking area (Tracking Area, TA), a cell, a beam, a synchronization signal block (Synchronization Signal Block, SSB), etc.

When the sampling area is the frequency, the sampling area may indicate data collection in a cell corresponding to the frequency. When the sampling area is the beam, the sampling area may indicate data collection within a coverage range of the beam. When the sampling area includes others, they may be understood by analogy, and will not be repeated here.

For example, the cell may include an urban macro cell (Uma), a suburban macro cell (Sma), an urban micro cell (Umi), etc.

For example, the beam may include: an RX beam of the terminal device and a DL TX beam. A UE RX beam may specifically include: the number of UE Rx beams (including the number of panels and antenna array size of the terminal device), etc.

For example, the DL TX beam may specifically include: a DL Tx beam codebook (including various beam (pairs) sets A and antenna array size of a gNB).

### (2) Data preprocessing method

The data preprocessing method is a method for preprocessing the collected data. Optionally, the data preprocessing method may include one or more of the following:
a quantization method, a normalization method, a dequantization method, a denormalization method, etc.

### (3) Data post-processing method

The data post-processing method is a method for processing an output result of the model. Optionally, the data post-processing method may include one or more of the following:
a quantization method, a normalization method, a dequantization method, a denormalization method, etc.

For the quantization method in the information (2) and the information (3), the quantization method may include one or more of the following:
a ratio analysis method, a trend analysis method, a structural analysis method.

Correspondingly, the terminal device may further acquire a quantization parameter corresponding to the quantization method, for example, quantization precision and/or a quantization bit number. For example, the quantization precision may be, for example, a float point Float point 64/32/16 or an integer Int 16/8/4, etc.

For example, the terminal device may acquire the quantization parameter through any one of following methods 1 and 2.

### Method 1

In the method 1, the terminal device may acquire the quantization parameter locally. In this case, the quantization parameter may be preset, for example, specified by a protocol.

### Method 2

In the method 2, the terminal device may acquire the quantization parameter from other devices. For example, the network device may send the quantization parameter, and the terminal device may receive the quantization parameter sent by the network device.

For the normalization method in the information (2) and the information (3), the normalization method may include one or more of the following:
min-max normalization, standard score, reference point normalization.

Correspondingly, the terminal device may further acquire a normalization parameter sampled by the normalization method.

For example, the terminal device may acquire the normalization parameter through any one of following methods 1 and 2.

### Method 1

In the method 1, the terminal device may acquire the normalization parameter locally. In this case, the normalization parameter may be preset, for example, specified by a protocol.

### Method 2

In the method 2, the terminal device may acquire the normalization parameter from other devices. For example, the network device may send the normalization parameter, and the terminal device may receive the normalization parameter sent by the network device.

In a possible implementation, an optimization parameter received by the terminal device may be carried in one or more of following signaling:
an RRC message, a media access control (Media Access Control, MAC) control element (Control Element, CE), downlink control information (Downlink Control Information, DCI), etc.

That is, the network device may send the optimization parameter through one or more of the following: the RRC message, the MAC CE, the DCI, etc.

### (4) Model output type

The model output type is used for determining a type of the output result of the model. Optionally, the model output type may include one or more of the following:
line of sight (Line of Sight, LOS), non-line of sight (Non-Line of Sight, NLOS), coordinate information, a receiving beam, a receiving/transmitting beam pair, accuracy, valid time, an intermediate parameter, etc.

For example, the LOS may be used for determining whether a reference signal is an LOS path during model output, which is used for assisting in network positioning. This is beneficial for the network device to use a reference signal of a LOS path to improve positioning accuracy.

For example, the NLOS may be used for determining whether the reference signal is an NLOS path during the model output, which is used for assisting in network positioning.

For example, the coordinate information may be a coordinate of the terminal device, which may be one or more of a cell, a cell list, a tracking area TA, a TA list, a registration area RA, an RA list, other spatial identifiers (e.g., a Zoom ID), etc. The coordinate information may also be latitude and longitude information of the terminal device, which may be represented in an absolute coordinate or a relative coordinate, and the coordinate information may further include time information. For example, the terminal device is at latitude 35°12'N and longitude 108°54'E at 11:15:20. The coordinate information may also have other forms, which are not specifically limited in the present application.

For example, the receiving beam refers to a model output being an RX beam identifier.

The receiving/transmitting beam pair refers to the model output being an RX beam identifier and a Tx beam identifier.

The accuracy may be accuracy of a prediction result output by the model. For example, in positioning, if the model outputs that the terminal device is at latitude 35°12'N and longitude 108°54'E with accuracy of 95%, it can be considered that there is a high probability that a location of the terminal device is at the position coordinate.

The valid time refers to valid time of the model output. For example, the valid time may be absolute time, for example, the model output is valid before a certain moment, or a relative time, for example, a timer is initiated at the time of the model output, and the model output is valid within the timer. Conversely, when the model output is not within the valid time, it can be considered that the model output no longer meets indicated accuracy. Other forms of the valid time are not specifically limited in the present application.

The intermediate parameter may include: an angle of arrival (Angle of Arrival, AoA), time difference of arrival (Time Difference of Arrival, TDOA), etc.

S202, the terminal device optimizes an input and/or an output of the model according to the optimization information.

After acquiring the optimization information, the terminal device may optimize the input and/or the output of the model according to the optimization information.

It should be noted that the terminal device may optimize an input and/or an output of an updated model, or may optimize an input and/or an output of a model that has not been updated.

The terminal device may optimize the input of the model according to the data collection indication information and/or the data preprocessing method.

Specifically, the terminal device may optimize the data collection of the model according to the data collection indication information, and thereby optimize the input of the model. For example, when the data collection indication information includes the sampling target and the sampling target is frequency1, the terminal device may perform data collection for data of the model according to the sampling target during the data collection of the model, that is, the model may perform data collection on the frequency1.

The terminal device may optimize the output of the model according to the data post-processing method and/or the model output type.

It can be understood that for a variation value parameter (e.g., the sampling period variation value, the sampling frequency variation value, the sampling length variation value, etc.), the terminal device may determine a latest parameter (e.g., a new sampling period, a new sampling frequency, a new sampling length, etc.) according to the variation value parameter and a baseline parameter (e.g., a sampling period, a sampling frequency, a sampling length, etc.).

For a non-variation value parameter, the terminal device may use the acquired optimization information as a latest configuration of the model, thereby achieving model optimization.

In the present embodiment, after completing a model update, the terminal device may acquire the optimization information, where the optimization information includes one or more of the data collection indication information, the data preprocessing method, the data post-processing method, and the model output type; and the terminal device then optimizes the input and/or the output of the model according to the optimization information, ensuring the performance of the updated model, enabling the updated model to work normally, and thus ensuring normal service for a user.

FIG. 3 is a structural diagram of a model optimization apparatus provided in a second embodiment of the present application. The apparatus 30 includes: an acquisition module 301 and an optimization module 302.

The acquisition module 301 is configured to acquire optimization information, where the optimization information one or more of data collection indication information, a data preprocessing method, a data post-processing method, and a model output type. The data collection indication information is used for indicating a parameter used during data collection, the data preprocessing method is a method for preprocessing collected data, and the data post-processing method is a method for processing an output result of a model.

The optimization module 302 is configured to optimize, according to the optimization information, an input and/or an output of the model.

In a possible implementation, the data collection indication information includes one or more of the following:
a type of the collected data;
a sampling period;
a sampling period variation value;
a sampling frequency;
a sampling frequency variation value;
a sampling length;
a sampling length variation; and
a sampling target.

In a possible implementation, the sampling target is one or more of the following:
a height of a base station;
a height of a terminal device;
a preset distance inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

In a possible implementation, the data preprocessing method includes one or more of the following:
a quantization method; and
a normalization method.

In a possible implementation, the quantization method includes one or more of the following:
a ratio analysis method;
a trend analysis method; and
a structural analysis method.

In a possible implementation, the acquisition module 301 is specifically configured to:
acquire a quantization parameter used in the quantization method.

In a possible implementation, the normalization method includes one or more of the following:
min-max normalization;
standard score; and
reference point normalization.

In a possible implementation, the acquisition module 301 is specifically configured to:
acquire a normalization parameter used in the normalization method.

In a possible implementation, the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

In a possible implementation, the optimization information is carried in a response message of a model update request.

In a possible implementation, the optimization information is carried in one or more of following signaling:
a radio resource control RRC message;
a media access control layer control element MAC CE; and
downlink control information DCI.

The apparatus in the present embodiment may be configured to execute the technical solutions of the model optimization method in the above-mentioned method embodiments. Specific implementation and technical effects are similar, and will not be repeated here.

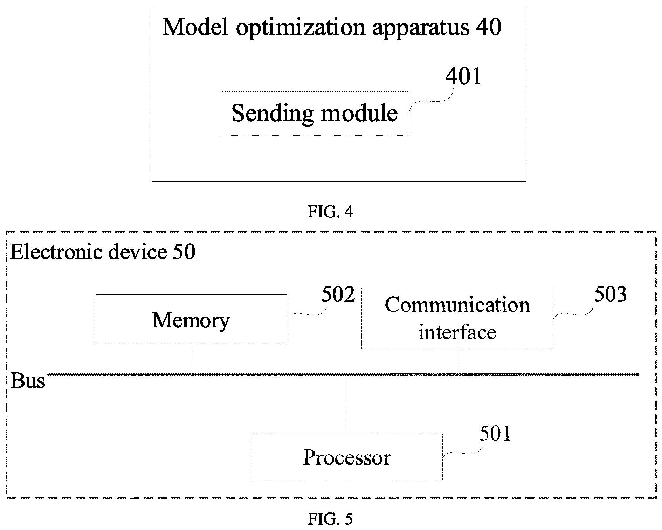

FIG. 4 is a structural diagram of a model optimization apparatus provided in a third embodiment of the present application. The apparatus 40 includes: a sending module 401.

The sending module 401 is configured to send optimization information, where the optimization information is used for optimizing an input and/or an output of a model.

The optimization information includes one or more of data collection indication information, a data preprocessing method, a data post-processing method, and a model output type, where the data collection indication information is used for indicating a parameter used during data collection, the data preprocessing method is a method for preprocessing collected data, and the data post-processing method is a method for processing an output result of the model.

In a possible implementation, the data collection indication information includes one or more of the following:
a type of the collected data;
a sampling period;
a sampling period variation value;
a sampling frequency;
a sampling frequency variation value;
a sampling length;
a sampling length variation; and
a sampling target.

In a possible implementation, the sampling target is one or more of the following:
a height of a base station;
a height of a terminal device;
a preset distance inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

In a possible implementation, the data preprocessing method includes one or more of the following:
a quantization method; and
a normalization method.

In a possible implementation, the quantization method includes one or more of the following:
a ratio analysis method;
a trend analysis method; and
a structural analysis method.

In a possible implementation, the sending module 401 is specifically configured to:
send a quantization parameter used in the quantization method.

In a possible implementation, the normalization method includes one or more of the following:
min-max normalization;
standard score; and
reference point normalization.

In a possible implementation, the sending module 401 is specifically configured to:
send a normalization parameter used in the normalization method.

In a possible implementation, the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

In a possible implementation, the optimization information is carried in a response message of a model update request.

In a possible implementation, the optimization information is carried in one or more of following signaling:
a radio resource control RRC message;
a media access control layer control element MAC CE; and
downlink control information DCI.

The apparatus in the present embodiment may be configured to execute the technical solutions of the model optimization method in the above-mentioned method embodiments. Specific implementation and technical effects are similar, and will not be repeated here.

FIG. 5 is a structural diagram of an electronic device provided in a fourth embodiment of the present application. As shown in FIG. 5, the electronic device 50 may include: at least one processor 501 and a memory 502.

The memory 502 is configured to store a program. Specifically, the program may include program codes, and the program codes include a computer operation instruction.

The memory 502 may contain a random access memory (Random Access Memory, RAM) and may also include a non-volatile memory (Non-volatile Memory), for example, at least one disk memory.

The processor 501 is configured to execute a computer executable instruction stored in the memory 502 to implement the method described in the above-mentioned method embodiments. The processor 501 may be a central processing unit (Central Processing Unit, CPU), an application specific integrated circuit (Application Specific Integrated Circuit, ASIC), or one or more integrated circuits configured to implement the embodiments of the present application.

Optionally, the electronic device 50 may further include: a communication interface 503. In specific implementation, if the communication interface 503, the memory 502, and the processor 501 are implemented independently, the communication interface 503, the memory 502, and the processor 501 may be interconnected through a bus and communicate with each other. The bus may be an industry standard architecture (Industry Standard Architecture, ISA) bus, a peripheral component interconnect (Peripheral Component, PCI) bus, or an extended industry standard architecture (Extended Industry Standard Architecture, EISA) bus, etc. The bus may be divided into an address bus, a data bus, a control bus, etc., but this does not mean that there is only one bus or one type of bus.

Optionally, in specific implementation, if the communication interface 503, the memory 502, and the processor 501 are integrated on a chip, the communication interface 503, the memory 502, and the processor 501 may communicate through an internal interface.

The electronic device 50 may be a chip, a chip module, an integrated development environment (Integrated Development Environment, IDE), a terminal device, a network device, etc.

The electronic device in the present embodiment may be configured to execute the technical solutions in the above-mentioned method embodiments. Specific implementation and technical effects are similar, and will not be repeated here.

A fifth embodiment of the present application provides a computer readable storage medium, and the computer readable storage medium may include: a USB flash drive, a mobile hard disk, a read-only memory (Read-Only Memory, ROM), a RAM, a magnetic disk, an optical disk, or any other medium capable of storing a computer executable instruction. Specifically, the computer readable storage medium stores a computer executable instruction which, when executed by a computer, causes the technical solutions shown in the above-mentioned method embodiments to be implemented. Specific implementation and technical effects are similar and will not be repeated here.

A sixth embodiment of the present application provides a computer program product, including a computer program which, when executed by a computer, causes the technical solutions shown in the above-mentioned method embodiments to be implemented. Specific implementation and technical effects are similar and will not be repeated here.

A seventh embodiment of the present application provides a chip, and the chip stores a computer program which, when executed by the chip, causes the technical solutions shown in the above-mentioned method embodiments to be implemented.

In a possible implementation, the chip may also be a chip module.

An eighth embodiment of the present application provides a module device, including a power module, a storage module, and a chip module.

The power module is configured to provide power to the module device.

The storage module is configured to store data and instructions.

The chip module is configured to execute the technical solutions shown in the above-mentioned method embodiments. Specific implementation and technical effects are similar and will not be repeated here.

Those skilled in the art, after considering the description and practicing the invention disclosed herein, will readily conceive of other implementations of the present application. The present application is intended to cover any variations, uses, or adaptive changes of the present application, which follow the general principles of the present application and include common general knowledge or customary technical means in the technical field not disclosed in the present application. The description and the embodiments are to be regarded as exemplary only, and the true scope and spirit of the present application are indicated by the appended claims.

It should be understood that the present application is not limited to the precise structures described above and shown in the drawings, and various modifications and changes may be made without departing from its scope. The scope of the present application is limited only by the appended claims.

In the present application, "and/or" is merely a description of an association relationship of associated objects, indicating that there may be three relationships. For example, A and/or B may indicate three situations: A exists alone, both A and B exist, or B exists alone. In addition, the character "/" herein indicates that the associated objects before and after it are in an "or" relationship.

"At least one (item) of the following" or similar expressions refer to any combination of these items, including a single item or any combination of multiple items. For example, at least one of a, b, or c may indicate: a, b, c, a and b, a and c, b and c, or a, b, and c, where a, b, and c may each be an element or a set containing one or more elements.

In the present application, "at least one" refers to one or more. "Multiple" refers to two or more. The descriptions of "first," "second," etc., in the embodiments of the present application are only used for illustration and distinction of the described objects, do not imply order or any special limitation on the number of devices in the embodiments of the present application, and do not constitute any limitation on the embodiments of the present application. For example, the first threshold and the second threshold are only used to distinguish different thresholds, and do not indicate any difference in size, priority, or importance between the two thresholds.

In the present application, "exemplary," "in some embodiments," "in other embodiments," etc., are used to indicate examples, illustrations, or explanations. Any embodiment or design scheme described as "exemplary" in the present application should not be interpreted as being more preferred or advantageous than other embodiments or design schemes. Rather, the use of the term "exemplary" is intended to present concepts in a specific manner.

In the present application, "of (of)", "corresponding (corresponding, relevant)", "corresponding (corresponding)", and "associated" may sometimes be used interchangeably. It should be noted that when the distinction is not emphasized, the meanings they express are consistent. In the embodiments of the present application, communication and transmission may sometimes be used interchangeably. It should be noted that when the distinction is not emphasized, the meanings they express are consistent. For example, the transmission may include sending and/or receiving, and may be a noun or a verb.

In the present application, "equal to" may be used in conjunction with "less than" or "greater than," but not simultaneously with both "less than" and "greater than". When "equal to" is used in conjunction with "less than", it applies to the technical solution of "less than." When "equal to" is used in conjunction with "greater than", it applies to the technical solution of "greater than."

## Claims

1. A model optimization method, comprising:
acquiring optimization information, the optimization information comprising one or more of data collection indication information, a data preprocessing method, a data post-processing method, and a model output type, wherein the data collection indication information is used for indicating a parameter used during data collection, the data preprocessing method is a method for preprocessing collected data, and the data post-processing method is a method for processing an output result of a model; and
optimizing, according to the optimization information, an input and/or an output of the model.

2. The method according to claim 1, wherein the data collection indication information comprising one or more of the following:
a type of the collected data;
a sampling period;
a sampling period variation value;
a sampling frequency;
a sampling frequency variation value;
a sampling length;
a sampling length variation; and
a sampling target.

3. The method according to claim 2, wherein the sampling target is one or more of the following:
a height of a base station;
a height of a terminal device;
a preset inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

4. The method according to any one of claims 1 to 3, wherein the data preprocessing method and/or the data post-processing method comprises one or more of the following:
a quantization method; and
a normalization method.

5. The method according to claim 4, wherein the quantization method comprises one or more of the following:
a ratio analysis method;
a trend analysis method; and
a structural analysis method.

6. The method according to claim 4 or 5, further comprising:
acquiring a quantization parameter used in the quantization method.

7. The method according to any one of claims 4 to 6, wherein the normalization method comprises one or more of the following:
min-max normalization;
standard score; and
reference point normalization.

8. The method according to claim 7, further comprising:
acquiring a normalization parameter used in the normalization method.

9. The method according to claim 2 or 3, wherein the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

10. The method according to any one of claims 1 to 9, wherein the optimization information is carried in a response message of a model update request.

11. The method according to any one of claims 1 to 9, wherein the optimization information is carried in one or more of following signaling:
a radio resource control RRC message;
a media access control layer control element MAC CE; and
downlink control information DCI.

12. A model optimization method, comprising:
sending optimization information, the optimization information being used for optimizing an input and/or an output of a model;
wherein the optimization information comprises one or more of data collection indication information, a data preprocessing method, a data post-processing method, and a model output type, wherein the data collection indication information is used for indicating a parameter used during data collection, the data preprocessing method is a method for preprocessing collected data, and the data post-processing method is a method for processing an output result of the model.

13. The method according to claim 12, wherein the data collection indication information comprises one or more of the following:
a type of the collected data;
a sampling period;
a sampling period variation value;
a sampling frequency;
a sampling frequency variation value;
a sampling length;
a sampling length variation; and
a sampling target.

14. The method according to claim 13, wherein the sampling target is one or more of the following:
a height of a base station;
a height of a terminal device;
a preset distance inter-site distance ISD;
a movement speed of the terminal device;
indoor terminal device distribution;
outdoor terminal device distribution;
a frequency;
a registration area RA;
a tracking area TA;
a cell;
a beam; and
a synchronization signal block SSB.

15. The method according to any one of claims 12 to 14, wherein the data preprocessing method comprises one or more of the following:
a quantization method; and
a normalization method.

16. The method according to claim 15, wherein the quantization method comprises one or more of the following:
a ratio analysis method;
a trend analysis method; and
a structural analysis method.

17. The method according to claim 15 or 16, further comprising:
sending a quantization parameter used in the quantization method.

18. The method according to any one of claims 15 to 17, wherein the normalization method comprises one or more of the following:
min-max normalization;
standard score; and
reference point normalization.

19. The method according to claim 18, further comprising:
sending a normalization parameter used in the normalization method.

20. The method according to claim 13 or 14, wherein
the sampling period variation value is used for determining the sampling period based on a baseline sampling period;
the sampling frequency variation value is used for determining the sampling frequency based on a baseline sampling frequency; and
the sampling length variation value is used for determining the sampling length based on a baseline sampling length.

21. The method according to any one of claims 12 to 20, wherein the optimization information is carried in a response message of a model update request.

22. The method according to any one of claims 12 to 20, wherein the optimization information is carried in one or more of following signaling:
a radio resource control RRC message;
a media access control layer control element MAC CE; and
downlink control information DCI.

23. A model optimization apparatus, comprising:
an acquisition module, configured to acquire optimization information, the optimization information comprising one or more of data collection indication information, a data preprocessing method, a data post-processing method, and a model output type, wherein the data collection indication information is used for indicating a parameter used during data collection, the data preprocessing method is a method for preprocessing collected data, and the data post-processing method is a method for processing an output result of a model; and
an optimization module, configured to optimize, according to the optimization information, an input and/or an output of the model.

24. A model optimization apparatus, comprising:
a sending module, configured to send optimization information, the optimization information being used for optimizing an input and/or an output of a model;
wherein the optimization information comprises one or more of data collection indication information, a data preprocessing method, a data post-processing method, and a model output type, wherein the data collection indication information is used for indicating a parameter used during data collection, the data preprocessing method is a method for preprocessing collected data, and the data post-processing method is a method for processing an output result of the model.

25. An electronic device, comprising: a processor, and a memory communicatively connected to the processor;
wherein the memory stores a computer executable instruction; and
the processor executes the computer executable instruction stored in the memory to implement the model optimization method according to any one of claims 1 to 11.

26. An electronic device, comprising: a processor, and a memory communicatively connected to the processor;
wherein the memory stores a computer executable instruction; and
the processor executes the computer executable instruction stored in the memory to implement the model optimization method according to any one of claims 12 to 22.

27. A computer readable storage medium, wherein the computer readable storage medium stores a computer executable instruction which, when executed by a computer, causes the model optimization method according to any one of claims 1 to 22 to be executed.
